(19) Europäisches Patentamt
European Patent Office
Office européen des brevets

(11) **EP 3 853 473 B1**

(12) **EUROPEAN PATENT SPECIFICATION**

(45) Date of publication and mention
of the grant of the patent:
**07.02.2024 Bulletin 2024/06**

(21) Application number: **19863707.6**

(22) Date of filing: **18.09.2019**

(51) International Patent Classification (IPC):
***F03D 13/20*** *(2016.01)*

(52) Cooperative Patent Classification (CPC):
**F03D 13/201;** F05B 2240/122; F05B 2240/912;
F05B 2250/232; Y02E 10/72; Y02E 10/728

(86) International application number:
**PCT/DK2019/050273**

(87) International publication number:
**WO 2020/057706 (26.03.2020 Gazette 2020/13)**

(54) **WIND TURBINE HAVING A CIRCULAR AND A CONICAL TOWER STRUCTURE WITH PASSIVE FLOW CONTROL MEANS AND USE OF SUCH A WIND TURBINE**

WINDTURBINE MIT EINER KREISFÖRMIGEN UND KONISCHEN TURMKONSTRUKTION MIT PASSIVER STRÖMUNGSVORRICHTUNG UND VERWENDUNG EINER SOLCHEN WINDTURBINE

ÉOLIENNE AYANT UNE STRUCTURE DE TOUR CIRCULAIRE ET CONIQUE AVEC DES MOYENS DE COMMANDE DU DÉBIT PASSIFS ET UTILISATION D'UNE TELLE ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2018 DK PA201870610
13.12.2018 DK PA201870814**

(43) Date of publication of application:
**28.07.2021 Bulletin 2021/30**

(73) Proprietor: **Envision Energy (Denmark) ApS
8600 Silkeborg (DK)**

(72) Inventors:
• **FRYDENDAL, Ib
8740 Brædstrup (DK)**
• **GRABAU, Peter
6000 Kolding (DK)**

(74) Representative: **Qip Patentanwälte
Dr. Kuehn & Partner mbB
Goethestraße 8
80336 München (DE)**

(56) References cited:
**EP-B1- 1 287 262          WO-A1-2018/149527
WO-A1-2018/149527     DE-A1- 19 704 759
DE-A1-102004 030 094   JP-U- S5 483 230
US-A- 4 059 129          US-A- 4 059 129
US-A1- 2006 054 073**

• **UGUR ORAL ÜNAL ET AL: "An experimental
investigation into the effect of vortex generators
on the near-wake flow of a circular cylinder",
EXPERIMENTS IN FLUIDS ; EXPERIMENTAL
METHODS AND THEIR APPLICATIONS TO FLUID
FLOW, SPRINGER, BERLIN, DE, vol. 48, no. 6, 10
December 2009 (2009-12-10), pages 1059-1079,
XP019845346, ISSN: 1432-1114**

## Description

### Field of the Invention

The present invention relates to a wind turbine having a circular and a conical tower structure with passive flow control means for suppressing vortex induced vibrations in said tower structure. The invention further comprises the use of such a wind turbine.

### Background of the Invention

It is well known that wind turbines will have towers being higher and that this causes problems with vortex induced vibrations in the tower, especially during installation before the nacelle is installed.

These problems in wind turbine towers and corresponding problems in other circular structures are today solved with active control means or with passive means like e.g. spiral formed ridges on chimneys.

The higher the wind turbine towers are the more problems occur with first and second mode tower vibrations.

From blades on wind turbines and from wings on aeroplanes vortex generator units are known which are triangular. They will function with a well-defined orientation of the wind passing the vortex generator and will influence the boundary layer around the blade or wing. These vortex generator units are used for noise reduction.

US 4059129 A1 describes a cylindrical body provided with means for counteracting vibrations resulting from a transversely flowing fluid. US 2006/054073 A1 describes an apparatus and a method for reducing vortices in a wake of a marine member. UGUR ORAL UNAL ET AL, Exp Fluids (2010) 48:1059-1079, DOI 10.1007/s00348-009-0791-6 describes an experimental investigation into the effect of vortex generators on the near-wake flow of a circular cylinder. WO 2018/149527A1 and JP S5483230 U relating to a building structure with means to reduce induced vibrations.

### Object of the Invention

It is an object of the invention to provide a solution where a tower structure of a wind turbine is provided with passive flow control means in order to solve the above problems with vortex induced vibrations.

### Description of the Invention

According to the present invention this object is obtained with a wind turbine having a circular and a conical tower structure and which is peculiar in that the said passive flow control means comprises vortex generator units which each comprises a fin and a base through which the fin is attached to the surface of the tower structure in order to influence the boundary layer around the tower structure and thereby suppressing vortex induced vibrations and that each of said fins comprises a rectangular plate being arranged substantially radially in relation to the circular or conical tower structure and each of the fins is arranged under an angle between 0° and 30° in relation to the plane being perpendicular to a longitudinal axis through the tower structure, wherein the vortex generator units are covering more than 30% of the upper part of the height of the wind turbine tower.

A wind turbine tower will be mounted at a foundation. The wind turbine tower may be ground mounted on a foundation or pile structure on land or may be mounted off shore on a foundation which may be a floating structure or be a fixed-bottom offshore structure.

The tower structure comprises a circular bottom section and a conical upper section.

The tower structure will be restrained in the foundation and will be subject to vibrations induced by the wind.

As the vortex generator unit has a rectangular fin it will be able to effectively influence the boundary layer around the tower structure where the wind may come from different directions and with different orientation in relation to the tower structure.

Moreover, vortex generator units being rectangular will have double the area compared to triangular vortex generator units for the same height above the surface of the tower structure.

In a tower for a wind turbine, the height of the fins will be important due to transportation. With rectangular fins it is possible to have a lower total diameter for the tower to be transported. This is important for road transport where the overall height is important.

When the tower structure is constructed of steel, it is important that the vortex generator units are glued to the surface of the wind turbine tower. Hereby it is possible to obviate welding which could decrease the strength of the wind turbine tower.

The fin of the vortex generator unit will have two large flat side faces opposing each other and small side faces around the perimeter of the rectangular fin.

It is preferred that the base through which the fin is attached to the surface of the tower structure has a larger extension than the side face of the rectangular fin. Accordingly, a plate used for the base of the vortex generator unit will provide an area which ensures a secure attachment of the vortex generator unit to the surface.

Especially when the attachments are effected by gluing it is important to have a surface for efficient gluing of the vortex generator unit to the surface of the tower structure. When having a base plate which can be substantially rectangular and where the fin is arranged on a central part of the base plate with a direction perpendicular to the base plate, it is possible to obtain an adhesion strength which ensures the maintenance of the vortex generator unit to the surface of the tower structure, even when the wind load induces a moment on the vortex generator unit.

In general the rectangular fin will have a greater extension along the surface of the tower structure than the height about the surface of the tower structure. As explained above, this will be important in order to have an overall diameter as low as possible due to transportation. Accordingly it is possible to provide a sufficient area of the fin by increasing the length along the surface and decreasing the height above the surface.

It is preferred that the vortex generator units are mounted on the tower structure off-site during the manufacture of segments from which the tower structure is made. However, it is also possible that the vortex generator units may be mounted at the tower structure on-site where the tower structure is intended to be erected.

The plate of the fin is arranged substantially radially in relation to the tower structure. For a wind turbine tower the direction of the wind will be substantially horizontally orientated.

As the rectangular fin is arranged substantially perpendicular to the longitudinal axis through the tower structure, it will have a substantially horizontal orientation in a tower for a wind turbine. Therefore the fin will predominantly have wind flowing parallel to the plane of the rectangular plate of the fin.

The vortex generator units will have an efficient influence on the boundary layer around the tower structure as the flow of the wind will normally have a horizontal orientation. The wind will have a substantially laminar flow in a distance above the ground and accordingly the lowermost part of the tower structure.

The more vortex generator units which are distributed around the circumference of the tower structure, the more efficient reduction of vortex induced vibrations are obtained for wind coming from different directions.

The wind turbine tower is especially vulnerable for wind induced vibration during installation before a nacelle is arranged on top of the tower. However, even with the nacelle mounted on top of the tower, a wind turbine tower having substantial height will benefit from the effect of vortex generator units in order to suppress vortex induced vibrations in the tower.

According to a further embodiment of the invention the wind turbine is peculiar in that said tower structure comprises two or more vortex generator units, preferably four or more, which are symmetrically arranged along the circumference or part of the circumference of the tower structure.

The efficiency of the vortex generator units will be increased with more vortex generator units arranged along the circumference of the tower structure. It is preferred to arrange the vortex generator units symmetrically in order to have the best effect for wind coming from different directions.

In general the number of vortex generator units along the circumference will depend on the diameter of the tower at the actual section of the tower where the vortex generators are arranged. However, simulations have illustrated that there will be a substantial effect only having two vortex generator units along the circumference. As incoming wind, at specific locations, predominantly will come from one direction, it will in a number of cases be sufficient to have two vortex generator units arranged along the circumference.

In general strong winds causing vortex induced vibrations in the tower will come from one prevalent direction. Therefore the vortex generators may only be distributed along a part of the circumference of the tower structure.

The simulations have shown that four vortex generator units arranged with 90° along the circumference is very efficient for incoming wind from any direction.

According to a further embodiment of the invention the wind turbine is peculiar in that said tower structure comprises two or more vortex generator units, preferably four or more, arranged in different sections along at least a part of the height of the tower structure.

The effect of the vortex generator units is increased by having the vortex generator units distributed over the height of the tower structure and not only along the circumference of the tower structure. Accordingly, one could say that a grid of vortex generator units can be formed by distribution of the vortex generator units along the circumference and also in rows in sections at different positions along a part of the height of the tower structure.

The tower structure being a tower mounted in a foundation on the ground will not need to have vortex generator units distributed along the total height of such tower. It will only be necessary to have the vortex generator units arranged in sections at the part of the tower structure being close to the top of the structure. The effect of the wind will be higher at the top of a tower than it will be at the bottom of a tower.

According to the invention the wind turbine is peculiar in that each of the fins may be arranged under an angle between 0° and 30° in relation to the plane being perpendicular to the longitudinal axis through the tower structure.

The fin of the vortex generator unit needs not to be arranged in a plane exactly perpendicular to the longitudinal axis through the tower structure. Simulations have shown that the vortex generator units will be efficiently suppressing the vortex induced vibrations in the tower structure even when being arranged on an angle up to 30° in relation to the plane perpendicular to the longitudinal axis through the tower structure.

The fins may be arranged under different angles or the same angle. It is possible to have more fins which are arranged under different angles. Likewise it is also possible to have fins arranged with different orientations compared to the plane perpendicular to the longitudinal axis through the tower structure.

According to a further embodiment of the invention the wind turbine is peculiar in that said fins have a height being less than 5% of the diameter of the tower structure, preferably less than 3% of the diameter of the tower structure.

Simulations have shown that the fins will be efficient with a height about a surface of the tower structure which is relative to the diameter of the tower structure at the specific section of the tower where the vortex generators are arranged. These simulations have shown that efficient suppression of the wind induced vibrations is obtained with a height less than 5% of the diameter of the tower structure.

In order to have a small overall diameter of the tower structure with the vortex generator units mounted, it is preferred that the fins have a height which is less than 3% of the diameter of the tower structure.

The fins may be arranged under different angles around the circumference. Accordingly, when transporting a tower structure - or sections of such tower structure - for a wind turbine tower, it is preferred that the tower is transported with fins not being orientated vertical on the tower during transport. When orientating the fins under an angle the overall height of the transported tower with vortex generator units will be decreased. For instance a tower provided with four vortex generator units arranged symmetrical, the tower will be transported with the fins orientated 22.5° to each side of a vertical plane through the tower.

According to a further embodiment of the invention the wind turbine is peculiar in that the vortex generator units are arranged along a helical path at the surface of the tower structure.

It is possible to provide the vortex generator units in different patterns or grids on the surface of the tower structure. The vortex generator units can be arranged along a helical path along the circular surface. Hereby the vortex generator units in different heights will each have a position being off-set in relation to the neighbouring vortex generator units in order to create the helical path.

Each vortex generator unit in such helical path may have a fin being orientated in a plane being substantially perpendicular to the longitudinal axis through the tower structure or may have different angles in relation to such perpendicular orientation.

According to a further embodiment of the invention the wind turbine is peculiar in that the vortex generator units are arranged in a pattern comprising more layers along the height of the tower structure and with more vortex generator units in each layer along the circumference of the tower structure and that vortex generator units in one layer are offset along the circumference compared to the position of vortex generator units in an adjacent layer.

The vortex generator units may be arranged in a pattern comprising more layers along the length of the structure. Each layer will comprise more vortex generator units. In such pattern it is preferred that the position of vortex generator units in the different layers are off-set around the circumference compared to the position of the vortex generator units arranged in the neighbouring layers. Hereby the most efficient distribution of vortex generator units around the circumference is obtained. Hereby a tower structure is obtained which is possible to have a suppression of vortex induced vibrations for any direction of incoming wind on the tower structure.

Moreover, this embodiment may be erected with any orientation. Accordingly there is no requirement for a specific orientation of the tower when erecting a tower on site.

According to the invention the wind turbine is peculiar in that the vortex generator units are covering more than 30% of the upper part of the height of the wind turbine tower.

As already mentioned a wind turbine tower will have special benefits of vortex generator units covering the upper part of the tower structure. Simulations have shown that a covering of approximately 30% or more of the upper part of the height will be efficient for suppressing the vortex induced vibrations.

The 30% need not to be the upper most part. There might be an upper most part of the tower structure which is not provided with vortex generator units and then vortex generator units are arranged at an intermediate part close to the uppermost part. This intermediate part may comprise 30%, or more, of the total height of the tower.

The length may be increased to 35% or 50% of the height of the tower. However, as mentioned the length of the part covered with vortex generators should be provided at the upper part of the tower structure.

According to a further embodiment of the invention the wind turbine is peculiar in that the tower structure has a height of 100 meter or more, preferably of 140 meter or more and that the vortex generator units are covering more than 30% and at most 50% of the upper part of the tower structure.

For wind turbine towers it is still more common to operate with heights of 100 meter or more today. With these wind turbine towers having a length of 140 meter simulations have illustrated that efficient suppressing of the vortex induced vibration is obtained when 30 - 50 meter of the length of such tower structure is provided with vortex generator units.

According to a further embodiment of the invention the wind turbine is peculiar in that the vortex generator units are arranged with a mutual distance of more than 1 meter.

Simulations have illustrated that efficient suppression of the vortex induced vibrations is obtained even when the vortex generator units are not arranged close to each other. Thus the simulations have illustrated that the vortex generator units function effectively even when having a mutual distance of more than 1 meter. Efficient results are obtained even with a mutual distance up to 3-4 meter.

According to a further aspect of the invention a wind turbine with vortex generator units is used to solve problems with first and second mode vibrations in the tower structure.

The vortex generator units are efficient to solve problems with vortex induced vibrations not only of first mode but also second mode in the tower structure.

When even higher towers are established there may also be realised problems with third mode vibrations. These third mode vibrations may also be suppressed with the present invention.

The vortex generator units may be manufactured from different materials. It is preferred to use plastic materials for the manufacture due to low weight and due to the ability to be glued on the surface of a tower structure.

The material used for the vortex generator unit will preferably be UV-resistant polycarbonate. This is a material which is also used for noise reducing vortex generator units on wind turbine blades.

The thickness of the fin of a vortex generator unit can be between 1 and 4 mm and preferably about 2 mm thick. The dimensions for the fin of the vortex generator unit will typically be 150 mm x 75 mm. The base of the vortex generator unit will typically have a size of 80 mm x 160 mm.

When establishing a base of the vortex generator unit it is easy to provide a curvature corresponding to the circular curvature of the tower structure. However, the flexibility of the plastic material may also provide a curvature which may be adapted to tower structures having different diameters. Accordingly identical vortex generator units may be used for mounting on a circular tower structure or a tower structure having a decreasing diameter from the bottom against the top and thus having a slight conical form.

There are especially two situations where the use of vortex generator units is beneficial.

The first situation is when a tower is erected. Just before the last section on a wind turbine tower is mounted and during the mounting of the last section of the tower, then the effect of the vortex generator units will be most efficient.

The second situation is a wind turbine in which the blades are pitched out or if there is a loss of power and the wind direction changes in comparison to the wind direction earlier. In this situation the wind may enter from the side of the wind turbine blade. This will cause fore and aft vibrations in the tower. In this situation the vortex generator units will be efficient in suppressing the vibrations.

For a wind turbine tower where the nacelle and the rotor blades are not mounted it is not likely that the high frequency which initiates second mode will occur. However, the second mode vibration has occurred in wind turbine tower having a height of 140 meter.

The problems with the first or second mode vibrations have not been dealt with in prior art.

The use of the present invention is especially beneficial in steel towers for wind turbines.

Simulations effected illustrate that the distance between the vortex generator units can be approximately 1-1.2 meter. However, it is also possible a distance between vortex generator units being 3 meter in the height direction. A tower for a wind turbine will at a height of 80 meter in general have a circumference of 14 meter. In this position there can be 3-4 meter between each vortex generator units in the circumferential plane. In general one could say that there will be approximately one vortex generator unit per 3 $m^2$. However, the simulations illustrate that the ratio could be as low as one vortex generator unit per 12 $m^2$.

Above is mentioned different ratios for the height of the vortex generator units compared to the diameter of the tower. In practice it has shown that the boundary layer around a tower is approximately 2% of the diameter of a tower. Accordingly, the height of a vortex generator unit needs only to be 2% of the diameter of the tower in the section of the tower where the vortex generators are arranged.

However, as explained above the height could be up to a height being less than 5% of the diameter of the tower.

If prior art helical stripes are used the height will normally be 3-4% of the diameter of the tower. Accordingly, the overall diameter when using vortex generator units will be less than the overall diameter of the prior art helical stripes.

Moreover, helical stripes are necessarily mounted over a larger portion of the height of the tower with a continuously extension. This causes a use of material which is much higher amounts than the use of material for vortex generator units according to the present invention.

## Description of the Drawing

An embodiment of the invention will now be described, by way of example only, with reference to the accompanying drawings, in which:

Fig. 1 shows a wind turbine comprising a tower, Fig. 2A illustrates a first embodiment of a vortex generator unit for use on a wind turbine tower,

Fig. 2B illustrates a further embodiment of a vortex generator unit for use on a wind turbine tower,

Fig. 3 is a schematic illustration of the geometry of a wind turbine tower,

Fig. 4 illustrates the wind turbine tower illustrated in fig. 3 with indication of a zone, in which vortex generator units are arranged,

Fig. 5 illustrates a picture corresponding to fig. 4, however, illustrating another zone in which vortex generator units are arranged,

Fig. 6 illustrates a simplified wind turbine tower,

Fig. 7 illustrates a simplified graph of critical shear in relation to wind speed for the wind turbine tower illustrated in fig. 6,

Fig. 8 illustrates a simplified graph for the vortex induced vibration in relation to the power input for the wind turbine tower illustrated in fig. 6,

Figs. 9-12 illustrate graphs for first and second mode vibrations for a wind turbine tower having vortex generator units arranged in the zone illustrated in fig. 4, and

Figs. 13-16 illustrate graphs for first and second mode vibrations for a wind turbine tower having vortex generator units arranged in the zone illustrated in fig. 5.

**Detailed Description of the Invention**

In the following text the figures will be described one by one, and the different parts and positions seen in the figures will be numbered with the same numbers in the different figures. Not all parts and positions indicated in a specific figure will necessarily be discussed together with that figure.

**Position number list**

| | |
|---|---|
| 1 | wind turbine |
| 2 | tower |
| 3 | foundation |
| 4 | nacelle |
| 5 | hub |
| 6 | wind turbine rotor blade |
| 7 | first end of blade (root end) |
| 8 | second end of blade (tip end) |
| 9 | vortex generator unit |
| 10 | fin |
| 11 | base |
| 12 | length |
| 13 | height |
| 14 | lower part |
| 15 | intermediate section |
| 16 | upper section |
| 17 | zone |
| 18 | tower bottom |
| 19 | tower top |
| 20 | another zone |
| 21 | bottom section |
| 22 | upper section |
| 23 | graph |
| 24 | graph. |

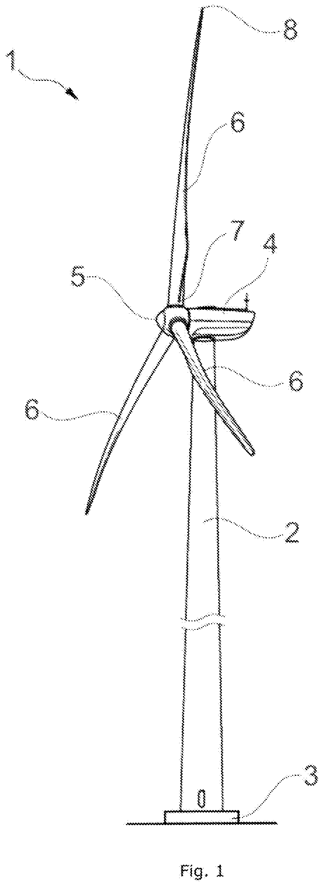

In fig. 1 a typical wind turbine 1 is seen comprising a tower 2 installed at a foundation 3. At the top of the tower 2 a nacelle 4 comprising e.g. a gearbox, a generator and other components is seen. At the nacelle 4 a shaft for carrying a rotor comprising a hub 5 and three wind turbine rotor blades 6 is also installed. The rotor blades 6 are arranged at the hub 5 at a first end 7 called the root end of the rotor blade 6. The second end 8 of the rotor blades 6 constitutes a tip end.

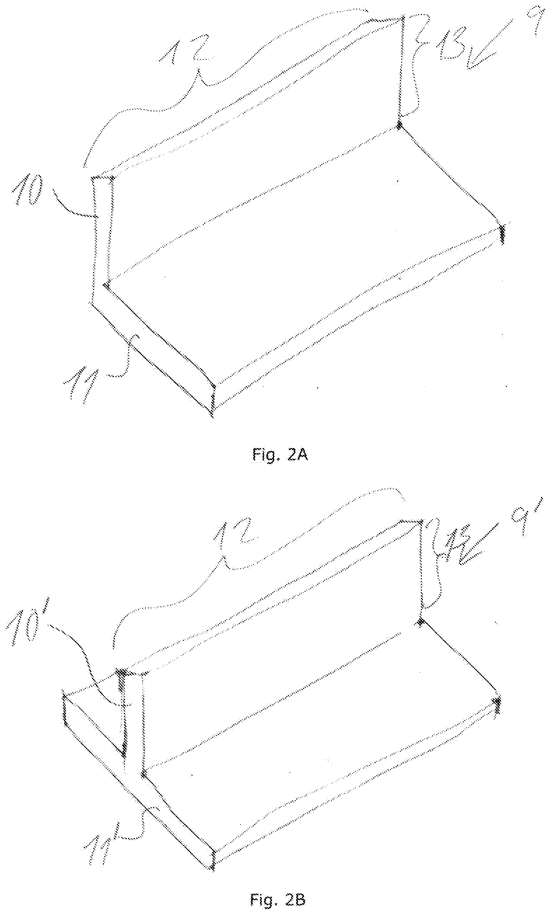

Fig. 2A illustrates a first embodiment for a vortex generator unit 9. The vortex generator unit 9 comprises a fin 10 and a base 11. Both the fin 10 and the base 11 are plate formed having a rectangular form. The fin 10 is arranged with an extension perpendicular to the orientation of the base 11.

The fin 10 has a length 12 and a height 13 above the base 11. In this embodiment the fin 10 is arranged at one side of the base 11.

Fig. 2B illustrates a further embodiment for a vortex generator unit 9'. The vortex generator unit 9' comprises a fin 10' and a base 11'. Both the fin 10' and the base 11' are plate formed having a rectangular form. The fin 10' has a length 12 and a height 13 above the base 11'.

In this embodiment the fin 10' is arranged in an intermediate position of the base 11'. The fin 10' is arranged centrally on the base 11'. However, the fin 10' may alternatively be displaced further to one side or another side.

It is also possible that the fin 10 or 10' can have a length 12 which is different from the length of the base 11,11'.

In fig. 2A and 2B the fin and base is illustrated with sharp edges. However, this is of illustrative purpose. The fin and the base may have rounded edges in order to better ensure a smooth flow of the wind around the vortex generator unit.

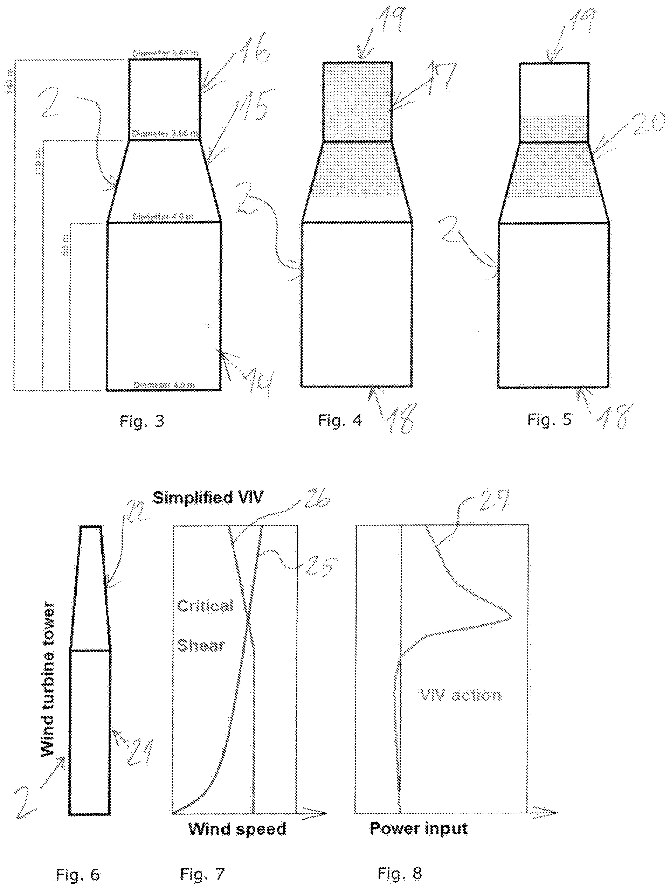

Fig. 3 illustrates a principle for the geometry of a 140 meter tower for a wind turbine. The geometry comprises a lower section 14 of the tower, which is cylindrical and has a height of 80 meter and a diameter of 4 meter. Moreover, the tower comprises an intermediate section 15 having a conical shape decreasing from a diameter of 4 meter to a diameter of 3.66 meter over a height of 30 meter. Furthermore, the tower comprises an upper section 16 which is cylindrical and has a height of 30 meter and a diameter of 3.66 meter.

The actual dimensions are for illustrative purpose and the towers may have any other height and any other dimension than the dimensions illustrated.

Fig. 4 illustrates a tower 2 having a first zone 17 in which area vortex generator units 9, 9' are arranged. The first zone 17 extends from a height of 90 meter from the tower bottom 18, which is placed on the ground or a foundation 3 to the tower top 19.

Fig. 5 illustrates a second zone 20 in which vortex generator units 9,9' are arranged. The second zone 20 is arranged with a height of 30 meter and extending from a position 90 meter above the bottom of the tower 18 to a position 120 meter above the bottom 18 of the tower.

The figures 6-8 illustrate an example intended to illustrate conditions for vortex induced vibrations (VIV) on a tower.

The lock in wind speed is governed by the Strouhal number, the diameter, and the frequency of the tower:

$$U.lock\_in = f.structural * diameter/Strouhal\ number.$$

A cylinder is said to be "locked in" when the frequency of oscillation is equal to the frequency of vortex shedding. In this region the largest amplitude oscillations occur.

The tower 2 illustrated in fig. 6 comprises a bottom section 21 having a circular cylindrical embodiment and an upper section 22 having a conical shape.

Hence, the diameter is constant below and decreasing with higher elevation above. The lock in wind speed is governed by the Strouhal number, the diameter, and the frequency of the tower:

$$U.lock\_in = f.structural * diameter/Strouhal\ number$$

Hence, for a constant Strouhal number the lock in wind speed is constant on the cylindrical section. Along the conical section, the lock in wind speed decreases with elevation as the diameter reduces according the formula above.

In fig. 7 the critical shear is illustrated in relation to the wind speed for the tower illustrated in fig. 6.

The lock in wind speed is illustrated by the curve denoted with 26 in fig. 7. A curve 25 illustrates a positive wind shear with a given maximum wind speed at the tower top. It is seen that the two curves cross at a given elevation. This elevation is at the conical section in this example, but it may be anywhere along the tower. At the position where the two curves cross the vortex frequency is equal to the tower frequency and lock in occur and the largest lift forces from vortices to the tower vibration is assumed. Moving away from the lock in elevation, to both sides, the vortex forces decrease.

The vortex forces multiplied by the speed of the tower provides the power input to the total tower vibration. The power input is illustrated by a curve denoted with 27 in fig. 8.

Figure 8 also illustrates the fact that, for certain conditions, the lift forces produces a negative power input to the vibration. The conditions for negative power input occur when the difference between the lock in wind speed and the real wind speed is large enough to make a phase shift between the lift forces and the tower velocity of more than +/- pi/2.

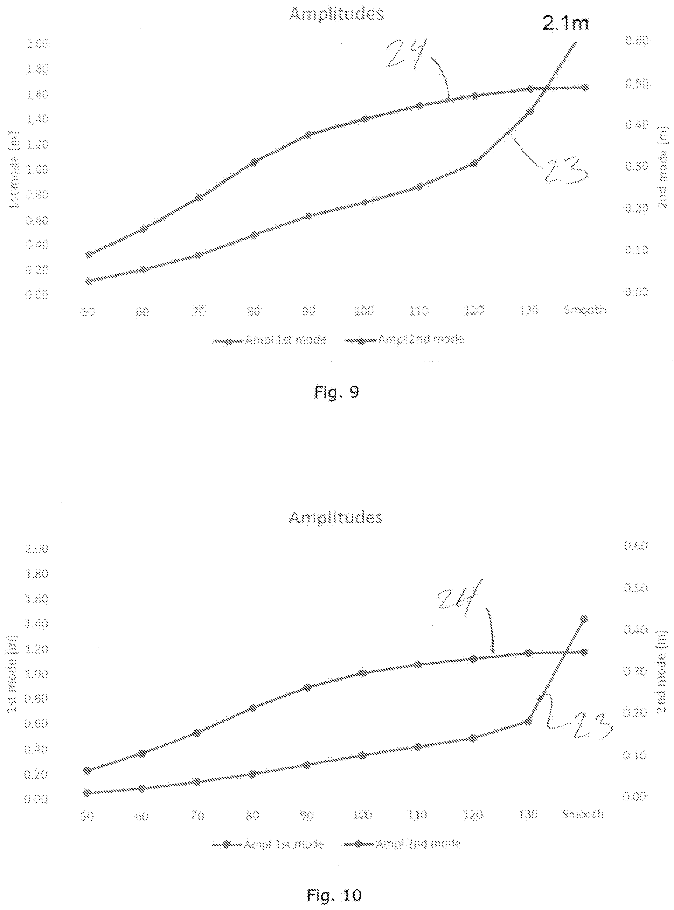

Figs. 9-12 illustrate different graphs for amplitudes caused by vortex induced vibration and the dampening effected with different locations of the zone 17 illustrated in fig. 4.

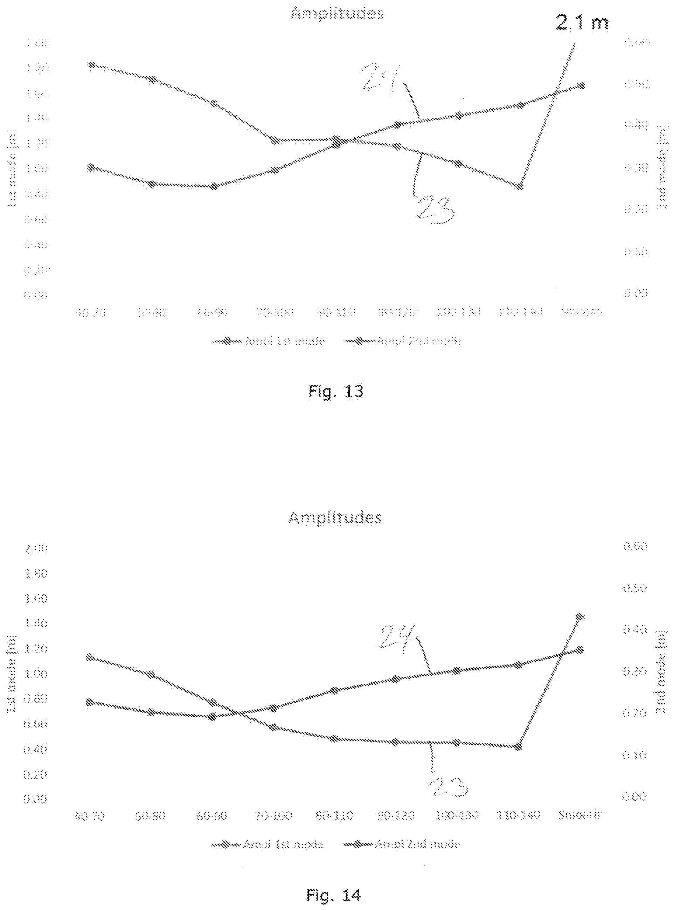

Figs. 13-16 illustrate different graphs for amplitudes caused by vortex induced vibration and the dampening effected with different locations of the zone 20 illustrated in fig. 5.

In figs. 9-16 a graph 23 illustrates the first mode and a graph 24 illustrates the second mode.

On the right hand side the amplitude of the second mode is illustrated in meter and on the left hand side the amplitude of the first mode is indicated in meter.

In figs 9-12 the amplitudes are illustrated compared to the extension of the zone 17. The horizontal axis indicates the extension of the zone 17. The figures represent the start of the zone 17 in meter above the bottom 18 of the tower.

In the right hand side of this horizontal axis is an illustration of a tower called "smooth". This indicates that there is no vortex generator units arranged on the tower. Accordingly the graphs 23 and 24 illustrates in the far right hand side the amplitude for a first and second mode vortex induced vibration around the tower without any vortex generator units mounted.

The different figures 9-12 illustrate the amplitudes under different conditions.

Fig. 9 illustrates a situation where turbulence is 0.0 and wind shear is 0.0.

Fig. 10 illustrates a situation where turbulence is 0.10 and wind shear is 0.0.

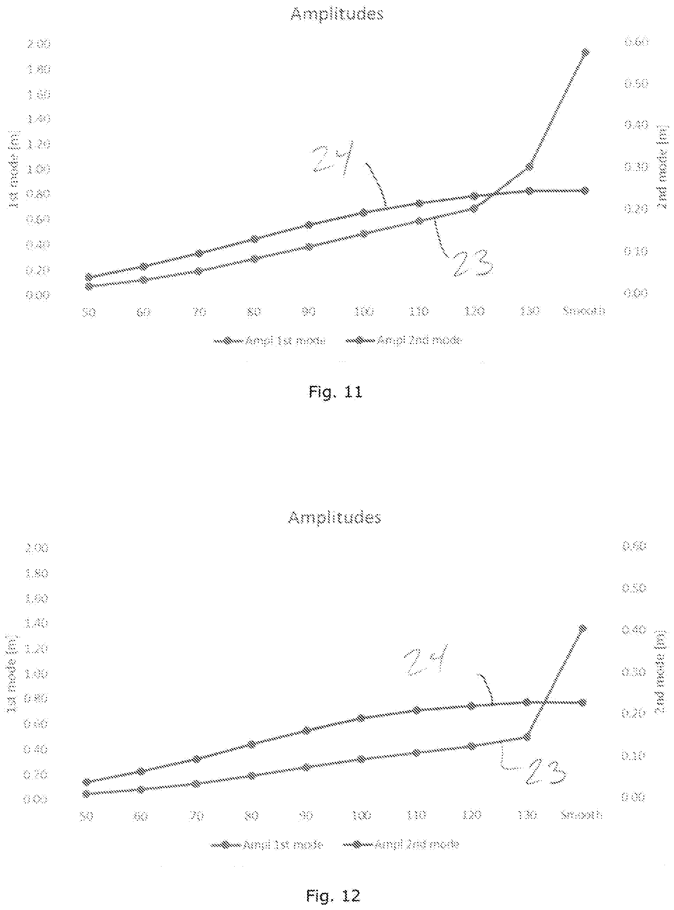

Fig. 11 illustrates a situation where turbulence is 0.0 and wind shear is 0.1.

Fig. 12 illustrates a situation where turbulence is 0.1 and wind shear is 0.1.

In figs 13-16 the amplitudes are illustrated compared to the extension of the zone 20. The horizontal axis indicates the extension of the zone 20. The figures represent the start and end of the zone 20 in meter above the bottom 18 of the tower.

In the right hand side of this horizontal axis is an illustration of a tower called "smooth". This indicates that there is no vortex generator units arranged on the tower. Accordingly the graphs 23 and 24 illustrates in the far right hand side the amplitude for a first and second mode vortex induced vibration around the tower without any vortex generator units mounted.

The different figures 13 -16 illustrate the amplitudes under different conditions.

Fig. 13 illustrates a situation where turbulence is 0.0 and wind shear is 0.0.

Fig. 14 illustrates a situation where turbulence is 0.1 and wind shear is 0.0.

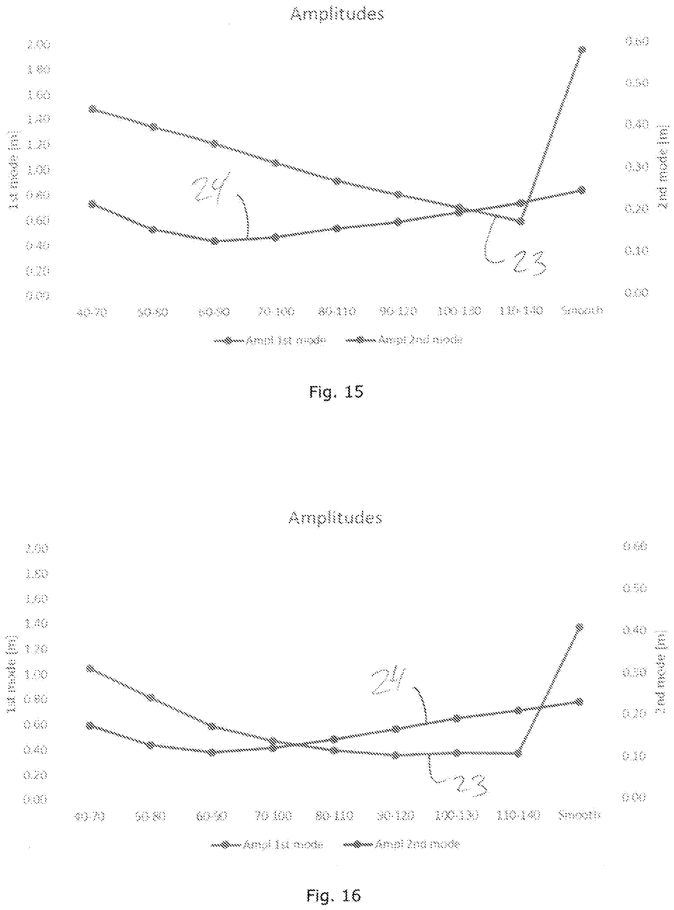

Fig. 15 illustrates a situation where turbulence is 0.0 and wind shear is 0.1.

Fig. 16 illustrates a situation where turbulence is 0.1 and wind shear is 0.1.

From the graphs in figs. 9-16 it is concluded that a primary factor for large amplitudes is turbulence and a secondary factor for large amplitudes is wind shear for first mode.

For second mode it is concluded that a primary factor for large amplitudes is wind shear and a secondary factor for large amplitudes is turbulence.

From the graphs it is concluded that the best positioning of vortex generator units is a zone of 30 meter extending from 70 to 100 meter above the bottom 18 of the tower in a 140 meter tower.

The invention is not limited to the embodiments described herein, and may be modified or adapted without departing from the scope of the present invention as described in the patent claims below.

## Claims

1. A wind turbine (1) having a circular and a conical tower (2) structure with passive flow control means for suppressing vortex induced vibrations in said tower structure, wherein the tower structure includes a circular cylindrical bottom section (21) and a conical upper section (22), wherein said passive flow control means comprises vortex generator units (9) which each comprises a fin (10) and a base (11) through which the fin (10) is attached to the surface of the tower structure in order to influence the boundary layer around the tower structure and thereby suppressing vortex induced vibrations and that each of said fins (10) comprises a rectangular plate being arranged substantially radially in relation to the circular or conical tower structure and each of the fins (10) is arranged under an angle between 0° and 30° in relation to the plane being perpendicular to the longitudinal axis through the tower structure,. wherein the vortex generator units (9) are covering more than 30% of the upper part of the height of the wind turbine tower (2).

2. A wind turbine according to claim 1, **characterised in that** said tower structure comprises two or more vortex generator units (9), preferably four or more, which are symmetrically arranged along the circumference or part of the circumference of the tower structure.

3. A wind turbine according to claim 1 or 2, **characterised in that** said tower structure comprises two or more vortex generator units (9), preferably four or more, arranged in different sections along at least a part of the height of the tower structure.

4. A wind turbine according to any one of the preceding claims, **characterised in that** said fins (10) have a height (13) being less than 5% of the diameter of the tower structure, preferably less than 3% of the diameter of the tower structure.

5. A wind turbine according to any one of the preceding claims, **characterised in that** the vortex generator units (9) are arranged along a helical path at the surface of the tower structure.

6. A wind turbine according to any one of the preceding claims 1-4, **characterised in that** the vortex generator units (9) are arranged in a pattern comprising more layers along the height of the tower structure and with more vortex generator units in each layer along the circumference of the tower structure and that vortex generator units (9) in one layer are offset along the circumference compared to the position of vortex generator units (9) in an adjacent layer.

7. A wind turbine according to claim 1, **characterised in that** the tower structure has a height of 100 meter or more, preferably of 140 meter or more and that the vortex generator units (9) are covering more than 30% and at most 50% of the upper part of a tower structure.

8. A wind turbine according to claim 7, **characterised in that** the vortex generator units (9) are arranged with a mutual distance of more than 1 meter.

9. Use of a wind turbine (1) with vortex generator units (1) according to any one of the preceding claims to solve problems with first and second mode vibrations in the tower structure.


**Patentansprüche**

1. Windturbine (1) mit einer kreisförmigen und einer konischen Turmstruktur (2) mit passiven Strömungssteuerungsmitteln zur Unterdrückung von wirbelinduzierten Vibrationen in der Turmstruktur, wobei die Turmstruktur einen zylindrischen unteren Abschnitt (21) und einen konischen oberen Abschnitt (22) aufweist, wobei die passiven Strömungssteuerungsmittel Wirbelgeneratoreinheiten (9) umfassen, die jeweils eine Rippe (10) und eine Basis (11), durch die die Rippe (10) an der Oberfläche der Turmstruktur befestigt ist, umfassen, um die Grenzschicht um die Turmstruktur herum zu beeinflussen und dadurch wirbelinduzierte Vibrationen zu unterdrücken, und dass jede der Rippen (10) eine rechteckige Platte umfasst, die im Wesentlichen radial in Relation zu der kreisförmigen oder konischen Turmstruktur angeordnet ist, und jede der Rippen (10) unter einem Winkel zwischen 0° und 30° in Bezug auf die Ebene angeordnet ist, die senkrecht zur Längsachse durch die Turmstruktur verläuft, wobei die Wirbelgeneratoreinheiten (9) mehr als 30% des oberen Teils der Höhe des Windturbinenturms (2) abdecken.

2. Windturbine nach Anspruch 1, **dadurch gekennzeichnet, dass** die Turmstruktur zwei oder mehr Wirbelgeneratoreinheiten (9), vorzugsweise vier oder mehr, umfasst, die symmetrisch entlang des Umfangs oder eines Teils des Umfangs der Turmstruktur angeordnet sind.

3. Windturbine nach Anspruch 1 oder 2, **dadurch gekennzeichnet, dass** die Turmstruktur zwei oder mehr Wirbelgeneratoreinheiten (9), vorzugsweise vier oder mehr, umfasst, die in verschiedenen Abschnitten entlang mindestens eines Teils der Höhe der Turmstruktur angeordnet sind.

4. Windturbine nach einem der vorhergehenden Ansprüche, **dadurch gekennzeichnet, dass** die Rippen (10) eine Höhe (13) haben, die weniger als 5% des Durchmessers der Turmstruktur, vorzugsweise weniger als 3% des Durchmessers der Turmstruktur, beträgt.

5. Windturbine nach einem der vorhergehenden Ansprüche, **dadurch gekennzeichnet, dass** die Wirbelgeneratoreinheiten (9) entlang einer schraubenförmigen Bahn an der Oberfläche der Turmstruktur angeordnet sind.

6. Windturbine nach einem der vorhergehenden Ansprüche 1 - 4, **dadurch gekennzeichnet, dass** die Wirbelgeneratoreinheiten (9) in einem Muster angeordnet sind, das mehr Schichten entlang der Höhe der Turmstruktur und mit mehr Wirbelgeneratoreinheiten in jeder Schicht entlang des Umfangs der Turmstruktur umfasst, und dass Wirbelgeneratoreinheiten (9) in einer Schicht entlang des Umfangs im Vergleich zur Position von Wirbelgeneratoreinheiten (9) in einer benachbarten Schicht versetzt sind.

7. Windturbine nach Anspruch 1, **dadurch gekennzeichnet, dass** die Turmstruktur eine Höhe von 100 Metern oder mehr, vorzugsweise von 140 Metern oder mehr hat und dass die Wirbelgeneratoreinheiten (9) mehr als 30% und höchstens 50% des oberen Teils der Turmstruktur bedecken.

8. Windturbine nach Anspruch 7, **dadurch gekennzeichnet, dass** die Wirbelgeneratoreinheiten (9) mit einem gegenseitigen Abstand von mehr als 1 Meter angeordnet sind.

9. Verwendung einer Windturbine (1) mit Wirbelgeneratoreinheiten (1) nach einem der vorhergehenden Ansprüche zur Lösung von Problemen mit Schwingungen des ersten und zweiten Modus in der Turmstruktur.

## Revendications

1. Éolienne (1) ayant une structure de tour (2) circulaire et conique avec des moyens de contrôle d'écoulement passifs destinés à supprimer les vibrations provoquées par des tourbillons dans ladite structure de tour, la structure de tour comportant un tronçon inférieur (21) cylindrique circulaire et un tronçon supérieur (22) conique, dans laquelle

   lesdits moyens de contrôle d'écoulement passifs comprennent des unités génératrices de tourbillons (9) qui comprennent chacune un aileron (10) et une base (11) par laquelle l'aileron (10) est fixé à la surface de la structure de tour afin d'influencer la couche limite autour de la structure de tour et supprimant ainsi les vibrations provoquées par des tourbillons et en ce que chacun desdits ailerons (10) comprend une plaque rectangulaire qui est agencée sensiblement radialement par rapport à la structure de tour circulaire ou conique et chacun des ailerons (10) est agencé selon un angle compris entre 0° et 30° par rapport au plan qui est perpendiculaire à l'axe longitudinal passant à travers la structure de tour,
   les unités génératrices de tourbillons (9) couvrant plus de 30 % de la partie supérieure de la hauteur de la tour (2) de l'éolienne.

2. Éolienne selon la revendication 1, **caractérisée en ce que** ladite structure de tour comprend deux unités génératrices de tourbillons (9) ou plus, de préférence quatre ou plus, qui sont agencées symétriquement le long de la circonférence ou d'une partie de la circonférence de la structure de tour.

3. Éolienne selon la revendication 1 ou 2, **caractérisée en ce que** ladite structure de tour comprend deux unités génératrices de tourbillons (9) ou plus, de préférence quatre ou plus, agencées dans différents tronçons le long d'au moins une partie de la hauteur de la structure de tour.

4. Éolienne selon l'une quelconque des revendications précédentes, **caractérisée en ce que** lesdits ailerons (10) présentent une hauteur (13) qui est inférieure à 5 % du diamètre de la structure de tour, de préférence inférieure à 3 % du diamètre de la structure de tour.

5. Éolienne selon l'une quelconque des revendications précédentes, **caractérisée en ce que** les unités génératrices de tourbillons (9) sont agencées le long d'un trajet hélicoïdal sur la surface de la structure de tour.

6. Éolienne selon l'une quelconque des revendications précédentes 1 à 4, **caractérisée en ce que** les unités génératrices de tourbillons (9) sont agencées selon un motif comprenant plus de couches le long de la hauteur de la structure de tour et avec plus d'unités génératrices de tourbillons dans chaque couche le long de la circonférence de la structure de tour et **en ce que** les unités génératrices de tourbillons (9) dans une couche sont décalées le long de la circonférence par rapport à la position d'unités génératrices de tourbillons (9) dans une couche adjacente.

7. Éolienne selon la revendication 1, **caractérisée en ce que** la structure de tour présente une hauteur de 100 mètres ou plus, de préférence de 140 mètres ou plus et **en ce que** les unités génératrices de tourbillons (9) couvrent plus de 30 % et au maximum 50 % de la partie supérieure d'une structure de tour.

8. Éolienne selon la revendication 7, **caractérisée en ce que** les unités génératrices de tourbillons (9) sont agencées à une distance mutuelle de plus de 1 mètre.

9. Utilisation d'une éolienne (1) dotées d'unités génératrices de tourbillons (1) selon l'une quelconque des revendications précédentes pour résoudre des problèmes relatifs à des vibrations du premier et du deuxième mode dans la structure de tour.

Fig. 1

Fig. 2A

Fig. 2B

Diameter 3.66 m

Diameter 3.66 m

Diameter 4.0 m

Diameter 4.0 m

Fig. 3

Fig. 4

Fig. 5

**Simplified VIV**

Wind turbine tower

Critical

Shear

Wind speed

VIV action

Power input

Fig. 6

Fig. 7

Fig. 8

Amplitudes

Fig. 9

Amplitudes

Fig. 10

Fig. 11

Fig. 12

Fig. 13

Fig. 14

Amplitudes

Fig. 15

Amplitudes

Fig. 16

**EP 3 853 473 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4059129 A1
- US 2006054073 A1
- WO 2018149527 A1
- JP S5483230 U

### Non-patent literature cited in the description

- **UGUR ORAL UNAL et al.** *Exp Fluids,* 2010, vol. 48, 1059-1079